(19)

Europäisches
Patentamt
European
Patent Office
Office européen
des brevets

(11) **EP 3 557 875 A1**

(12) **EUROPEAN PATENT APPLICATION**

(43) Date of publication:
**23.10.2019 Bulletin 2019/43**

(51) Int Cl.:
**H04N 21/234** (2011.01)  **H04N 21/235** (2011.01)
**H04N 21/414** (2011.01)

(21) Application number: **18305484.0**

(22) Date of filing: **19.04.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **YMAGIS**
**92240 Malakoff (FR)**

(72) Inventor: **LEJEUNE, Cédric**
**59350 Saint-André-lez-Lille (FR)**

(74) Representative: **Gevers Patents
Intellectual Property House
Holidaystraat 5
1831 Diegem (BE)**

(54) **MULTIDYNAMIC TRANSPORT AND RESTITUTION SYSTEM FOR THEATRICAL DISPLAY**

(57)    The present invention relates to a computer-readable medium, a creation method for this medium and a display method. The medium comprises an input encoded signal (1) with parts readable by at least two computing units suitable for different dynamic ranges, and pieces of additional movie information (5) for replacing parts of the input encoded signal (1) when the input encoded signal is read by one of the two computing units, in order to obtain display information to be displayed in the film theatre. An advantage of the present invention is that the standard DCP structure is not modified since the pieces of additional movie information may be stored in the additional version file of the DCP, and the information about how to insert them may be stored in the additional CPL.

*Fig. 2*

**Description**

**Field of the invention**

The present invention relates to signal mastering, transport and restitution for theatrical display.

**Background of the invention**

Digital cinema movies are provided to cinemas under digital format, for example as computer files comprising movie information. The movie information is processed by a digital display system which allows the movie to be displayed on a screen in a film theatre.

Today, there exists different digital renderings corresponding to different digital display systems. Depending on the choice of such display system, the image displayed on the screen will be more or less faithful to the artistic intention of the movie creative team. The provision of movie in different dynamic ranges makes the movie information transport and the movie restitution cumbersome.

**Summary of the invention**

An object of the present invention is to make less cumbersome the distribution of a movie that can be displayed in various dynamic ranges.

According to a first aspect, the invention provides a computer-readable medium comprising:

- an input encoded signal comprising movie information,
- pieces of additional movie information,

wherein the input encoded signal is transformable into a first output signal which forms display information when the input encoded signal is read by a first computing unit of first dynamic range,

wherein the pieces of additional movie information are suitable for replacing first parts of the input encoded signal to generate a second input signal, the second input encoded signal being transformable into a second output signal which forms display information when the input encoded signal is read by a second computing unit of a second dynamic range, and

wherein the display information is suitable for displaying a movie in a film theatre.

The medium according to the first aspect of the present invention comprises the information required to display the movie in several dynamic ranges since the input encoded signal comprises the information required to display the movie using the first dynamic range and the parts of the input encoded signal that is not suitable for the second dynamic range are replaced by the pieces of additional movie information.

Therefore, it is possible to display a movie by using the same medium compatible with different computing units suitable for various dynamic ranges. It is a real improvement relating to the prior art and simplifies the distribution for movie displays in film theatres.

In the invention, the first parts of the input encoded signal are used when using the first dynamic range and are not used when using the second dynamic range. The remaining parts of the input encoded signal are used for both the first and the second dynamic ranges. The first parts of the input encoded signal are not present in the second input signal because they are replaced by the pieces of additional movie information. Therefore, only parts of the information used during a reading by the computing unit of the first dynamic range are used during a reading by the computing unit of the second dynamic range.

The input encoded signal and the pieces of additional movie information are preferably comprised in a Digital Cinema Package (DCP), which is a set of encrypted files containing data related to the images, the sounds, the subtitles, and the meta-data of a movie.

Thanks to the invention, a unique DCP comprises the information required to display the movie in the first and in the second dynamic ranges.

The input encoded signal is preferably created on the basis of the highest dynamic range available, which makes possible to generate the first output signal from the DCP. The invention provides also for a plurality of pieces of additional movie information for replacing first parts of the input encoded signal before reading by the second computing unit.

Indeed, even if the input encoded signal as such is readable by the second computing unit, the resulting signal comprises movie sequences with a lack of rendering. This is for example the case in night sequences where the movie creative team uses several shades of darkness that cannot be properly rendered with the second dynamic range. In the invention, the parts of the input encoded signal that correspond to such sequences are replaced by the pieces of additional movie information. Therefore, even the images provided by these parts are then properly displayed because the pieces of additional movie information have been created, from the parts to be replaced, to provide movie sequences with an acceptable rendering when read by a computing unit of the second dynamic range.

The computer-readable medium preferably also comprises information indicating the first parts to replace, for example in an additional CPL as will be described later.

The computer-readable medium according to the invention therefore provides a convenient way to store and to transport movie information. In the frame of the present invention, the computer-readable medium may be on a server and the input encoded signal and the pieces of additional movie information (or a DCP that comprises the input encoded signal and the pieces of additional movie information) may be downloaded by the computing unit.

With the invention, the DCP is hardly bigger than a standard DCP since the input encoded signal provides the information for the first output signal and most of the information for the second output signal. The difference in size mainly comes from the pieces of additional information.

The DCP also comprises a set of Composition Play Lists (CPLs). Each CPL comprises a text file which contains information about how the DCP files containing data related to the images, the sounds and the subtitles can be read. In an embodiment of the invention, a least one of the CPLs comprises the information required to determine the parts of the input encoded signal to be replaced, i.e. the moments wherein the additional movie information has to be inserted to obtain display information.

The input encoded signal is preferably comprised in a first version file of the DCP. The pieces of additional movie information are preferably comprised in an additional version file of the DCP. Each version file corresponds to a CPL.

An advantage of the present invention is that the standard DCP structure is not modified since the pieces of additional movie information may be stored in the additional version file of the DCP, and the information about how to insert them may be stored in the additional CPL.

The display information is displayed by means of a first (respectively second) display system comprising the first (respectively second) computing unit during a movie display in a film theatre. For the first display system, the display information is based, preferably only, on the first output signal. For the second display system, the display information is based, preferably only, on the second output signal. The second output signal comes from the second input signal.

This second input signal is preferably defined as follows. The second input signal is partitioned in two portions: the first parts (that are replaced) and the remaining parts. The second input signal consists successively in a sequence alternating remaining parts and pieces of additional movie information, the latter substituting the first parts of the second input signal at predetermined periods of time. These periods of time are preferably determined during a mastering of the movie. These periods of time are preferably stored in the CPL.

As used herein, a « part » of a signal may comprise a plurality of pieces of signals that are not necessarily connected.

The movie information comprises at least movie images. The movie information preferably comprises movie sounds and/or subtitles. The input encoded signal preferably comprises only images. The first and/or second output signals are preferably electrical and/or optical signals. The display information is preferably in the form of an electrical signal and/or optical signal.

As used herein, a computer-readable medium may be any medium or set of medias able to store digital information. It may comprise, for example, at least one of: a digital memory, a server, a USB stick, a computer. It may be "in the cloud".

The film theatre can also be called "auditorium" or "cinema room".

Dynamic ranges such as the first and/or the second dynamic ranges are well known by a man skilled in the art. It refers to a ratio between a largest value and a smallest value of parameters that can be used by the first and/or the second computing units.

Preferably, the first dynamic range is strictly higher than the second dynamic range. More preferably, the first dynamic range is a High Dynamic Range (HDR) and the second dynamic range is either a Standard Dynamic Range (SDR) or an Extended Dynamic Range (EDR), more preferably, the second dynamic range is a Standard Dynamic Range (SDR). Other options are also possible within the frame of the present invention.

The medium preferably comprises a DCP comprising an HDR CPL and at least one of a SDR CPL and a EDR CPL. The DCP preferably comprises data stored in MXF. Preferably, the DCP comprises a main file related to a high dynamic movie display and that provides the input encoded signal, and complementary files that provide the pieces of additional movie information. Preferably, a decipher key makes possible for a user to select a CPL of the DCP to be read by a computing unit on the basis of the dynamic range of the computing unit.

According to an embodiment of the invention, the computer-readable medium comprises pieces of auxiliary movie information, and the pieces of auxiliary movie information are suitable for replacing second parts of the input encoded signal to generate a third input signal, the third input encoded signal being transformable into a third output signal which forms display information when the input encoded signal is read by a third computing unit of a third dynamic range.

Preferably, the first dynamic range is a HDR, the second dynamic range is a SDR, and the third dynamic range is a EDR. Even if only three dynamic ranges are considered herein, many more could be used within the frame of the invention. Preferably, the HDR CPL, EDR CPL and SDR CPL are comprised in a single DCP.

Preferably, the pieces of auxiliary movie information are configured for replacing the second parts of input encoded signal during some movie time periods, and the pieces of additional movie information are configured for replacing the first parts of input encoded signal at least during these movie time periods.

In other words, the second parts are preferably included in the first parts.

In particular, there are typically more additional movie information than auxiliary movie information. It can be explained by the fact that the first dynamic range is strictly higher than the third dynamic range, the latter being strictly higher than the second dynamic range. The size of the additional movie information is typically higher than the size of the auxiliary movie information.

According to a second aspect, the invention also provides a display system for a movie display in a film theatre comprising:

- a computer-readable medium according to the first aspect of the invention;
- at least one among:

  • the first computing unit,
    configured to use a first electro-optical transfer function for transforming the input encoded signal into the first output signal;
  • the second computing unit,
    configured to replace first parts of the input encoded signal by the pieces of additional movie information to generate a second input signal, and to use a second electro-optical transfer function for transforming said second input signal into said second output signal.

The first and/or second electro-optical transfer functions are configured for decoding the input encoded signal or remaining parts of it in accordance with the dynamic range of the computing unit.

The first and second electro-optical transfer functions are preferably comprised in a collection of electro-optical transfer functions which is designed for being received by the first and/or the second and/or the third computing units. This collection can be called "MD Map". It is typically installed in the first and/or second and/or third computing unit. A selection of electro-optical transfer function is performed on the basis of the dynamic range. This MD Map is designed in such a way that a basic tone mapping of a scene would work for most of the movies scenes. Pieces of additional and/or auxiliary movie information are generated as replacement scenes when an artistic choice needs to be made because of a lack of dynamic compromises the rendering of the artistic intent. In particular, the MD Map is preferably designed in order to contribute to a limitation of the amount of work for generating the additional and/or auxiliary movie information needed.

According to a third aspect, the invention provides a display method for displaying a movie in a film theatre, said film theatre comprising a computing unit which is a first or second computing unit suitable respectively for a first or second dynamic range, said display method comprising the following steps:

  (a) receiving an input encoded signal comprising movie information,
  (b) receiving pieces of additional movie information,
  (c) if the computing unit is the first computing unit, transforming the input encoded signal into a first output signal which forms display information,
  (d) if the computing unit is the second computing unit, replacing first parts of the input encoded signal by the pieces of additional movie information to generate a second input signal, and transforming the second input signal into a second output signal which forms display information,
  (e) displaying the movie in the film theatre using the display information.

The display method may also be called restitution method.

The transformation of the input encoded signal or the second input signal includes a decoding, preferably by means of an electro-optical transfer function.

Preferably, the transformation of the input encoded signal into the first output signal is made using a different method than the transformation of the second input signal into the second output signal. More preferably, the transformation of the input encoded signal into the first output signal provides a higher dynamic range than the transformation of the second encoded signal into the second output signal.

The embodiments and advantages of the first and second aspects of the invention are also valid to the present method.

The present invention also encompasses any method of displaying a movie based on the input encoded signal and the pieces of additional movie information as described herein, and encompasses any method of using or creating the input encoded signal and the pieces of additional movie information as described herein.

In an embodiment of the invention, the transformation of the second input signal to the second output signal at step (d) comprises a modification of the chrominance and/or luminance values of pixels of images of the movie information.

In an embodiment of the invention, the chrominance and luminance values of pixels in the input encoded signal are not modified when the input encoded signal is transformed into the first output signal, and are modified when the second input signal is transformed into the second output signal.

In an embodiment of the invention, the chrominance and luminance values of pixels are modified by a first method when the input encoded signal is transformed into the first output signal, and by a second method, different from the first method, when the second input signal is transformed into the second output signal. The second method provides a lower dynamic range than the first method.

The modifications in chrominance (respectively luminance) are preferably gradual variations with a degree of constraint that depends on the distance of the chrominance (respectively luminance) value to a reference (respectively luminance) value.

According to a preferred embodiment of the invention, the following steps precede step (c):

- receiving a decipher key that depends on the dynamic range;
- using said decipher key to chose to perform either step (c) or step (d).

A user can then apply the display method with information provided by the medium and with the decipher key, the latter being preferably implemented in order to select a CPL which is adapted to the dynamic range of the computing unit in the film theatre. The CPL indicates at least part of the input encoded signal to read as well as additional movie information to read if needed.

According to a preferred embodiment of the invention, the following steps precede step (c):

- receiving a collection of electro-optical transfer functions that comprises a first electro-optical transfer function suitable for the first dynamic range and a second electro-optical transfer function suitable for the second dynamic range;
- selecting the first electro-optical transfer function if the computing unit is the first computing unit and the second electro-optical transfer function if the computing unit is the second computing unit;

and wherein if the computing unit is the first computing unit, at step (c) the transformation of the input encoded signal into the first output signal uses the first electro-optical transfer function and if the computing unit is the second computing unit, at step (d) the transformation of the second input signal into the second output signal uses the second electro-optical transfer function.

The collection defines preferably the MD Map. It is received by the computing unit and the electro-optical transfer function is selected on the basis of its dynamic range.

The method comprises preferably the following steps before step (a):

• providing an input signal comprising movie information,
• determining an initial encoded signal that depends on the input signal using an opto-electrical transfer function, and
• determining the input encoded signal based on the initial encoded signal.

The input encoded signal may be equal to the initial encoded signal. The application of the opto-electrical transfer function can be referred to as "coding", "encoding" or "gamma encoding". The application of the electro-optical transfer function can be referred to as a "decoding" or "gamma decoding". The electro-optical transfer function is applied on each three colour values of each pixel of movie images carried by the input encoded signal. The electro-optical transfer function is preferably a power function with a power coefficient, gamma, strictly higher than one, more preferably comprised between 2.6 and 3.

In an embodiment of the invention, the transformation of the input encoded signal into the output signal uses an electro-optical transfer function which depends on a first calibration parameter determined on a basis of a value of luminance of black measured in the film theatre.

The output signal modulates the light intensity of the pixels of the image projected in the film theatre to obtain the desired light intensity on screen. Since the value of the first calibration parameter is based on a measurement performed in a given film theatre, its introduction in the electro-optical transfer function makes possible to take into account the actual specific projection conditions of that given film theatre in the restitution of the movie. In other words, the first calibration parameter causes a predistortion, or compensation, of the light intensity of the pixels of the projected image such that the image perceived in the film theatre is, after distortion due to the conditions in the film theatre, very close to the intention of the movie creative team. The light intensity of a pixel on the screen results from the combination of the light intensities of the three colour values of said pixel.

Preferably, the electro-optical transfer function is

$$L_{proj} = \left( L_{pw}^{1/gamma} - L_b^{1/gamma} \right)^{gamma} \left( \max[(V + b), 0] \right)^{gamma}$$

where:

- $L_{proj}$ is a luminance of said output signal,
- gamma is a power coefficient,
- $L_b$ is said first calibration parameter,
- $L_{pw}$ is a second calibration parameter determined on a basis of a value of luminance of peak white,
- b is given by $b = \dfrac{L_b^{1/gamma}}{L_{pw}^{1/gamma} - L_b^{1/gamma}}$, and
- V is a normalized intensity provided by said input encoded signal.

The value of luminance of peak white may be measured in the film theatre or it can be set equal to a predetermined value. Each of the three colour values of a pixel of an image of the movie is characterized by a value of the normalized intensity V. The output signal is used to modulate the corresponding colour intensities of the corresponding pixels. The number b does not depend on the movie, on the image or on the pixel, it depends only on the projection conditions in the film theatre.

According to a fourth aspect, the invention provides a method for creating a computer-readable medium according to the first aspect of the invention, the method comprising the following steps:

- providing an input encoded signal comprising movie information,
- determining said first parts of input encoded signal to be replaced;
- generating pieces of additional movie information based on said first parts of said input encoded signal to be replaced; and
- storing said input encoded signal and said pieces of additional movie information on said computer-readable medium.

The creation of the input encoded signal and the pieces of additional movie information is preferably performed during a mastering of the movie. The mastering also includes the encoding of the movie.

The input encoded signal is preferably created on the basis of a high dynamic range computing unit and the first electro-optical transfer function, in order to make it closer to the original intent. It may be encoded by using the above-mentioned encoding procedure.

In an embodiment of the invention, the determination of said first parts of input encoded signal to be replaced comprises reading said input encoded signal by means of said second computing unit using a second electro-optical transfer function.

During this step, the input encoded signal is read on the second computing unit in the mastering facility. This reading, with the second electro-optical transfer function generates an output signal. Based on this output signal, the first parts to be replaced due to a lack of dynamic are determined. This determination can be done manually or automatically. The pieces of additional movie information are then generated from the parts of the first encoded signal to be replaced and stored in a Version File. A Time Code of these pieces of additional movie information indicating periods of time for the replacements, is listed in an additional CPL which is comprised in the DCP. This additional CPL is preferably also stored in the computer-readable medium.

The "reading" by the second computing unit during the creation of the pieces of additional movie information may actually be an emulation of the second dynamic range by a computing unit.

When the method is used for creating pieces of auxiliary movie information for a third dynamic range, it is preferred that the determination of said second parts of input encoded signal to be replaced in the third dynamic range comprises reading said input encoded signal by means of said third computing unit using a third electro-optical transfer function.

This method can be used to generate a computer-readable medium with input encoded signals of three dynamic ranges. In particular, this method can be used to generate the above-mentioned medium compatible with HDR, SDR and EDR computing units. Even if only three dynamic ranges are considered herein, many more could be used within the frame of the invention.

According to a fifth aspect, the invention provides a computer program comprising instructions which, when the program is executed by a system comprising a computing unit, cause the system to carry out a method according to any embodiment of the invention.

**Brief description of the figures**

For a better understanding of the present invention, reference will now be made, by way of example, to the accompanying drawings in which:

- Figure 1 illustrates a schematic flowchart of steps of a creation method of DCP according to an embodiment of the invention.
- Figure 2 illustrates a schematic partial view of a DCP according to an embodiment of the invention, and a schematic representation of a first output signal generated through a reading of the DCP by a first computing unit suitable for a first dynamic range and a second output signal generated through a reading of the DCP by a second computing unit suitable for a second dynamic range.
- Figure 3 illustrates a schematic flowchart of steps of a display method according to an embodiment of the invention.

**Description of the invention**

The present invention is be described with respect to particular embodiments and with reference to certain drawings but the invention is not limited thereto. The drawings described are only schematic and are nonlimiting. In the drawings, the size of some of the elements may be exaggerated and not drawn on scale for illustrative purposes. On the figures, identical or analogous elements may be referred by a same number.

Furthermore, the terms first, second, third and the like in the description and in the claims, are used to distinguish between similar elements and not necessarily to describe a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In the frame of the present document, a "signal" is preferably a digital piece of information. It is preferably comprised in a computer file.

In the frame of the present document, a "digital image" is preferably a computer file or a part of computer file.

In the frame of the present document, the expression "movie information" indicates information of a movie, i.e., a moving visual medium to be projected in cinemas. The movie information preferably includes a succession of digital images, each image being made of pixels and each pixel being characterized by three colour values. The three colour values can be, for example, RGB values or XYZ values.

In the frame of the present document, a display system comprises a computing and preferably: a projector or a LED screen. The computing unit is preferably in the cinema, but it may be in a remote computer or server.

In the frame of the present document, a cinema is a facility that comprises at least one film theatre. It preferably comprises also one projection booth with a projector for each film theatre.

In the frame of the present document, the expression "peak white" means the brightest colour that a system is able to produce after calibration.

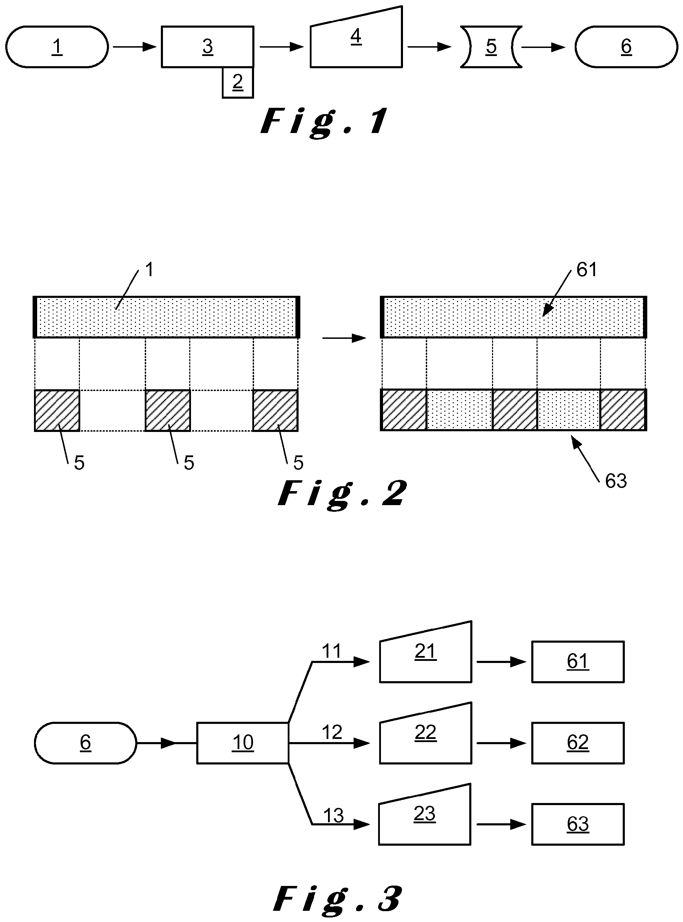

Figure 1 illustrates a schematic flowchart of steps of the creation method of a DCP which may be stored in the computer-readable medium according to an embodiment of the invention.

An input encoded signal 1 comprising movie information is provided. This input encoded signal 1 is readable by a first computing unit suitable for a high dynamic range in HDR technologies, in order to provide a first output signal of high quality. The transformation of the input encoded signal into the first output signal uses a first electro-optical transfer function. In an embodiment of the invention, the first electro-optical transfer function depends on a first calibration parameter determined on a basis of a value of luminance of black measured in the film theatre.

During the creation of the DCP, the input encoded signal 1 is read by a second computing unit 3 suitable for a standard dynamic range in SDR technologies. The second computing unit 3 uses a second electro-optical transfer function 2 designed to transform the input encoded signal 1 into a resulting signal 4. There may be parts of the resulting signal 4 that suffer from a lack of dynamic that compromises the rendering of the artistic intent. As a consequence, the parts (called first parts) of the input encoded signal 1 that give scenes that do not look good on the second computing unit 3 are regraded in an additional Version File. The additional Version File comprises a plurality of pieces of additional movie information 5 for replacing the first parts of the input encoded signal 1. A Time Code of the pieces of additional movie information 5 is then stored in an additional CPL indicating periods of time for substituting the parts of input encoded signal 1 by corresponding pieces of additional movie information 5. The input encoded signal 1, the pieces of additional movie information 5 and preferably the additional CPL are then stored in a DCP 6. The DCP 6 can then be transported and stored on a computer-readable medium.

The structure of the obtained DCP 6 is illustrated at Figure 2. The DCP 6 preferably contains data related to the high dynamic movie display in the input encoded signal 1, as well as complementary files containing data on pieces additional movie information 5. The indication on how to combine the input encoded signal 1 with the pieces of additional movie information 5 is in the additional CPL, which may be called SDR CPL.

When the DCP 6 is read by a computing unit, display information is generated. If the DCP 6 is read by a first computing unit suitable for HDR, the display information may be called first output signal 61. If the DCP 6 is read by a second computing unit suitable for SDR, the display information may be called second output signal 63. To obtain the second output signal 63, the second computing unit removes, deletes or overwrites first parts from the input encoded signal 1 and replace them with the pieces of additional movie information 5 to create a second input signal. The second input signal alternates successively:

- portions of the first encoded signal 1 (that may be called remaining parts), and
- pieces of additional movie information 5 replacing parts of the first encoded signal during predetermined periods of time.

Then, the second computing unit transforms the second input signal into the second output signal 63 which forms display information. The second output signal alternates successively:

- portions corresponding to a transformation of the remaining parts of the input encoded signal 1 by the second electro-optical transfer function 2, and
- portions corresponding to a transformation of the pieces of additional movie information 5 by the second electro-optical transfer function 2.

The method illustrated in Figure 1 can be repeated in order to obtain an updated single DCP 6 comprising auxiliary movie information for replacing second parts of the input encoded signal. This DCP 6 is useful for use by a third computing unit of another dynamic range, for example, EDR technologies, with a third electro-optical transfer function. In this case, this DCP 6 preferably contains HDR CPL, SDR CPL and EDR CPL. The EDR CPL comprises information indicating the second parts to replace.

A display method according to an embodiment of the invention, for displaying a movie in a film theatre comprising a a display system with a computing unit suitable for a dynamic range among HDR, EDR or SDR, is represented in Figure 3.

The display system of a film theatre comprises a first computer unit suitable for a high dynamic range in HDR technologies, a second computing unit suitable for a standard dynamic range in SDR technologies or a third computing unit suitable for an extended dynamic range in EDR technologies. The first electro-optical transfer function and a second electro-optical transfer function are preferably comprised in a MD Map comprising a collection of electro-optical transfer functions received by the display system of a film theatre. The MD Map may also comprise a third electro-optical transfer function suitable for a third dynamic range.

After the step of receiving the DCP 6 and the MD Map, a step 10 comprises a determination of the dynamic range of the computing unit. Three cases are presented but this number is only exemplary.

The first case 11 is: the dynamic range is a HDR. Then, a decipher key, which may be comprised in a "Key Delivery Message (KDM)", is used to select the HDR CPL on the DCP 6, and the first electro-optical transfer function is selected on the HDR display system. The DCP 6 is then read 21 by the computing unit of the HDR display system, and a first output signals 61 is generated, which forms display information. Then, the movie is displayed based on the display information. The reading step 21 comprises transforming the input encoded signal 1 into the first output signal 61.

The second case 12 is: the dynamic range is a EDR. Then, the decipher key KDM is used to select the EDR CPL on the DCP 6, and the third electro-optical transfer function is selected on the EDR display system. The DCP is then read 22 by the computing unit of the EDR display system, and a third output signal 62 is generated, which forms display information. Then, the movie is displayed based on the display information. The reading step 22 comprises replacing second parts of the input encoded signal 1 by the pieces of auxiliary movie information to generate a third input signal, and transforming the third input signal into the third output signal 62.

The third case 13 is: the dynamic range is a SDR. Then, the decipher key KDM is used to select the SDR CPL on the DCP 6, and the second electro-optical transfer function is selected on the display system. The DCP is then read 23 by the computing unit of the SDR display system, and a second output signal 63 is generated, which forms display information. Then, the movie is displayed based on the display information. The reading step 23 comprises replacing first parts of the input encoded signal 1 by the pieces of additional movie information 5 to generate a second input signal, and transforming the second input signal into the second output signal 63.

The invention may for example be used in the following way. During mastering:

- An input signal is encoded with an opto-electrical transfer function. This encoding provides, directly or with additional steps, the input encoded signal. The input encoded signal is preferably usable by HDR display systems. Part of the input encoded signal is usable in SDR or EDR display systems, but the input encoded signal comprises also sequences that provides a rendering of low quality when the input encoded signal is used in SDR or EDR display systems.

- The input encoded signal is used to determine pieces of additional movie information that will replace these sequences in the input encoded signal when the input encoded signal is used in SDR display systems. The information required to correctly place the pieces of additional movie information in SDR is stored in an SDR CPL.

- The input encoded signal is used to determine pieces of auxiliary movie information that will replace these sequences in the input encoded signal when the input encoded signal is used in EDR display systems. The information required to correctly place the pieces of auxiliary movie information in EDR is stored in an EDR CPL.

- The input encoded signal, the pieces of additional movie information, the pieces of auxiliary movie information, the SDR CPL and the EDR CPL are stored in a DCP, which is stored in a computer-readable medium.

During transport:

- The computer-readable medium may be plugged on the display system, for example if it is a USB stick, and the DCP content transferred to the display system. It is also possible that the display system downloads the DCP from a server that comprises the computer-readable medium. In any cases, a single DCP comprising the information for the movies in HDR, EDR and SDR is transferred to the display system, which may be an HDR, EDR or SDR display system.

In the cinema, before and during restitution:

- A MD map comprising HDR, EDR and SDR EOTFs is provided to cinemas. This step does not have to be performed for each movie.
- An EOTF corresponding to the dynamic range of the display system is chosen. This can be performed manually or automatically. This step does not have to be performed for each movie.
- A KDM is provided to a cinema for the type(s) (HDR, EDR or SDR) of display system(s) present in this cinema. This step does not have to be performed for each movie.
- The movie is provided in the form of the DCP, for example by a transport means as described above.
- A CPL corresponding to the dynamic range of the display system is chosen in the DCP. This can be performed manually or automatically.
- The display system determines display information in one of the following ways:

  ∘ If the display system has a HDR, the display information is based, preferably only, on the input encoded signal, preferably on all the input encoded signal.
  ∘ If the display system has an EDR, the display information is based on only parts of the input encoded signal and on the pieces of auxiliary movie information.
  ∘ If the display system has a SDR, the display information is based on only parts the input encoded signal and on the pieces of additional movie information.

- The display system displays the movie using the display information.

In other words, the present invention relates to a computer-readable medium, a creation method for this medium and a display method. The medium comprises an input encoded signal 1 with parts readable by at least two computing units suitable for different dynamic ranges, and pieces of additional movie information 5 for replacing parts of the input encoded signal 1 when the input encoded signal is read by one of the two computing units, in order to obtain display information to be displayed in the film theatre.

Although the present invention has been described above with respect to particular embodiments, it will readily be appreciated that other embodiments are also possible.

**Claims**

1. Computer-readable medium comprising:

   - an input encoded signal (1) comprising movie information,
   - pieces of additional movie information (5),

   wherein the input encoded signal (1) is transformable into a first output signal (61) which forms display information when the input encoded signal is read by a first computing unit of a first dynamic range,
   wherein the pieces of additional movie information (5) are suitable for replacing first parts of the input encoded signal (1) to generate a second input signal, the second input encoded signal being transformable into a second output signal (63) which forms display information when the input encoded signal (1) is read by a second computing unit of a second dynamic range, and
   wherein the display information is suitable for displaying a movie in a film theatre.

2. Computer-readable medium according to the preceding claim wherein said first dynamic range is strictly higher than said second dynamic range.

3. Computer-readable medium according to the preceding claim further comprising pieces of auxiliary movie information, and wherein the pieces of auxiliary movie information are suitable for replacing second parts of the input encoded signal to generate a third input signal, the third input encoded signal being transformable into a third output signal which forms display information when the input encoded signal is read by a third computing unit of a third dynamic range.

4. Computer-readable medium according to the preceding claim wherein:

   - said pieces of auxiliary movie information are configured for replacing said second parts of the input encoded signal during some time periods of the movie;
   - said pieces of additional movie information are configured for replacing said first parts of the input encoded signal at least during said time periods of the movie.

5. Display system for a movie display in a film theatre comprising:

   - a computer-readable medium according to any one of the preceding claims;
   - at least one among:

     • said first computing unit,
     configured to use a first electro-optical transfer function for transforming said input encoded signal into said first output signal;
     • said second computing unit,
     configured to replace first parts of the input encoded signal by the pieces of additional movie information to generate a second input signal, and to use a second electro-optical transfer function for transforming said second input signal into said second output signal.

6. Display method for displaying a movie in a film theatre, said film theatre comprising a computing unit which is a first or second computing unit suitable respectively for a first or second dynamic range,
   said display method comprising the following steps:

   (a) receiving an input encoded signal (1) comprising movie information,
   (b) receiving pieces of additional movie information (5),
   (c) if the computing unit is the first computing unit, transforming the input encoded signal (1) into a first output signal (61) which forms display information,

(d) if the computing unit is the second computing unit, replacing first parts of the input encoded signal (1) by the pieces of additional movie information (5) to generate a second input signal, and transforming the second input signal into a second output signal (63) which forms display information,
(e) displaying the movie in the film theatre using the display information.

7. Display method according to claim 6, wherein the transformation of the second input signal to the second output signal at step (d) comprises a modification of the chrominance and/or luminance values of pixels of images of the movie information.

8. Display method according to claim 6 or 7, wherein the following steps precede step (c):

   - receiving a collection of electro-optical transfer functions that comprises a first electro-optical transfer function suitable for the first dynamic range and a second electro-optical transfer function suitable for the second dynamic range;
   - selecting the first electro-optical transfer function if the computing unit is the first computing unit and the second electro-optical transfer function if the computing unit is the second computing unit;

   and wherein if the computing unit is the first computing unit, at step (c) the transformation of the input encoded signal into the first output signal uses the first electro-optical transfer function and if the computing unit is the second computing unit, at step (d) the transformation of the second input signal into the second output signal uses the second electro-optical transfer function.

9. Display method according to any one of the claims 6 to 8, wherein the following steps precede step (c):

   - receiving a decipher key that depends on said dynamic range;
   - using said decipher key to chose to perform either step (c) or step (d).

10. Display method according to any one of the claims 6 to 9, wherein the transformation of said input encoded signal into said first output signal or wherein the transformation of said second input signal into said second output signal uses an electro-optical transfer function which depends on a first calibration parameter determined on a basis of a value of luminance of black measured in the film theatre.

11. Display method according to the preceding claim, wherein said electro-optical transfer function is

$$L_{proj} = \left(L_{pw}^{1/gamma} - L_b^{1/gamma}\right)^{gamma} (max[(V+b),0])^{gamma}$$

where:

   - $L_{proj}$ is a luminance of said output signal,
   - gamma is a power coefficient,
   - $L_b$ is said first calibration parameter,
   - $L_{pw}$ is a second calibration parameter determined on a basis of a value of luminance of peak white,

   - b is given by $b = \dfrac{L_b^{1/gamma}}{L_{pw}^{1/gamma} - L_b^{1/gamma}}$, and

   - V is a normalized intensity provided by said input encoded signal.

12. Method for creating a computer-readable medium according to any one of the claims 1 to 4, said method comprising the following steps:

   - providing an input encoded signal comprising movie information,
   - determining said first parts of input encoded signal to be replaced;
   - generating pieces of additional movie information based on said first parts of said input encoded signal to be replaced; and
   - storing said input encoded signal and said pieces of additional movie information on said computer-readable medium.

13. Method according to claim 12, wherein the determination of said first parts of input encoded signal to be replaced comprises reading said input encoded signal by means of said second computing unit using a second electro-optical transfer function.

14. Method according to claim 13 used to create a computer readable medium according to claim 3 or 4, wherein the determination of said second parts of input encoded signal to be replaced in the third dynamic range comprises reading said input encoded signal by means of said third computing unit using a third electro-optical transfer function.

15. Computer program comprising instructions which, when the program is executed by a system comprising a computing unit, cause the system to carry out a method according to any of claims 6 to 14.

*F i g . 1*

*F i g . 2*

*F i g . 3*

Europäisches
Patentamt

European
Patent Office

Office européen
des brevets

## EUROPEAN SEARCH REPORT

Application Number

EP 18 30 5484

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/057462 A1 (MITCHELL NICHOLAS CURTIS [US] ET AL) 25 February 2016 (2016-02-25) | 1,3,4,6, 9,10, 12-15 | INV. H04N21/234 H04N21/235 H04N21/414 |
| Y | * paragraph [0014] - paragraph [0016] * * paragraph [0025] - paragraph [0036] * * paragraph [0041] - paragraph [0052] * * figures 1, 2, 5 * | 2,7,8 | |
| X | US 2008/281872 A1 (MIZUNO HIROSHI [JP]) 13 November 2008 (2008-11-13) | 1,3-6,9, 10,12-15 | |
| Y | * paragraph [0009] - paragraph [0021] * * paragraph [0098] - paragraph [0105] * * paragraph [0170] - paragraph [0191] * * figures 6, 7A, 14 * | 2,7,8 | |
| Y | US 2017/006273 A1 (BORER TIMOTHY JOHN [GB] ET AL) 5 January 2017 (2017-01-05) | 2,7,8 | |
| A | * paragraph [0007] - paragraph [0033] * * figure 1 * | 1,5,6,10 | |
| A | EP 3 214 841 A1 (PANASONIC IP MAN CO LTD [JP]) 6 September 2017 (2017-09-06) * paragraph [0137] - paragraph [0139] * | 1,2,5,7 | **TECHNICAL FIELDS SEARCHED (IPC)** H04N |
| A | Digital Cinema Initiatives: "Digital Cinema System Specification Version 1.2 with Errata as of 30 August 2012 Incorporated", , 10 October 2012 (2012-10-10), pages 1-155, XP055125427, Retrieved from the Internet: URL:http://dcimovies.com/specification/DCI _DCSS_v12_with_errata_2012-1010.pdf [retrieved on 2014-06-26] * page 95, line 1 - page 96, line 7 * | 1,6,9 | |

-/--

The present search report has been drawn up for all claims

| Place of search | Date of completion of the search | Examiner |
|---|---|---|
| The Hague | 13 June 2018 | Etienne, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 30 5484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/085889 A1 (BAYLON DAVID M [US] ET AL) 23 March 2017 (2017-03-23)<br>* paragraph [0030] - paragraph [0042] *<br>* figures 2a, 2B * | 1,6,8 | |

TECHNICAL FIELDS
SEARCHED     (IPC)

The present search report has been drawn up for all claims

| Place of search | Date of completion of the search | Examiner |
|---|---|---|
| The Hague | 13 June 2018 | Etienne, Christophe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 18 30 5484

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2018

| Patent document cited in search report | | | Publication date | Patent family member(s) | | | Publication date |
|---|---|---|---|---|---|---|---|
| US 2016057462 | A1 | | 25-02-2016 | CN | 105191336 | A | 23-12-2015 |
| | | | | EP | 2992684 | A1 | 09-03-2016 |
| | | | | JP | 2016522618 | A | 28-07-2016 |
| | | | | KR | 20160002863 | A | 08-01-2016 |
| | | | | US | 2016057462 | A1 | 25-02-2016 |
| | | | | WO | 2014179007 | A1 | 06-11-2014 |
| US 2008281872 | A1 | | 13-11-2008 | JP | 4311475 | B2 | 12-08-2009 |
| | | | | JP | 2008283489 | A | 20-11-2008 |
| | | | | US | 2008281872 | A1 | 13-11-2008 |
| US 2017006273 | A1 | | 05-01-2017 | AU | 2016285256 | A1 | 01-02-2018 |
| | | | | CA | 2990569 | A1 | 05-01-2017 |
| | | | | EP | 3318052 | A1 | 09-05-2018 |
| | | | | GB | 2539917 | A | 04-01-2017 |
| | | | | KR | 20180039053 | A | 17-04-2018 |
| | | | | US | 2017006273 | A1 | 05-01-2017 |
| | | | | WO | 2017001858 | A1 | 05-01-2017 |
| EP 3214841 | A1 | | 06-09-2017 | CN | 107005730 | A | 01-08-2017 |
| | | | | EP | 3214841 | A1 | 06-09-2017 |
| | | | | JP | 2016111691 | A | 20-06-2016 |
| | | | | US | 2017311034 | A1 | 26-10-2017 |
| US 2017085889 | A1 | | 23-03-2017 | EP | 3338450 | A1 | 27-06-2018 |
| | | | | EP | 3338451 | A1 | 27-06-2018 |
| | | | | EP | 3338452 | A1 | 27-06-2018 |
| | | | | KR | 20180056704 | A | 29-05-2018 |
| | | | | KR | 20180056705 | A | 29-05-2018 |
| | | | | US | 2017085879 | A1 | 23-03-2017 |
| | | | | US | 2017085880 | A1 | 23-03-2017 |
| | | | | US | 2017085889 | A1 | 23-03-2017 |
| | | | | WO | 2017053846 | A1 | 30-03-2017 |
| | | | | WO | 2017053849 | A1 | 30-03-2017 |
| | | | | WO | 2017053852 | A1 | 30-03-2017 |

EPO FORM P0459

For more details about this annex : see Official Journal of the European Patent Office, No. 12/82